Europäisches Patentamt

European Patent Office

Office européen des brevets

(11) Publication number: **0 364 200**
**A2**

## EUROPEAN PATENT APPLICATION

(21) Application number: 89310324.2

(51) Int. Cl.5: **A01G 9/02**

(22) Date of filing: 09.10.89

(30) Priority: **12.10.88 AU 895/88**

(43) Date of publication of application:
**18.04.90 Bulletin 90/16**

(84) Designated Contracting States:
**DE FR GB IT**

(71) Applicant: **Karpisek, Ladislav Stephan**
**86 Woodfield Boulevarde**
**Caringbah, N.S.W. 2229(AU)**

(72) Inventor: **Karpisek, Ladislav Stephan**
**86 Woodfield Boulevarde**
**Caringbah, N.S.W. 2229(AU)**

(74) Representative: **King, James Bertram**
**KINGS PATENT AGENCY LIMITED 73**
**Farringdon Road**
**London EC1M 3JB(GB)**

(54) A retainer for a growth supporting medium.

(57) A retainer of generally U shape for a growth
supporting medium, the retainer comprising two end
panels (1,2) with convergent front and rear edges
(4,3), a front panel (5) joining the front edges (4) of
the two end panels (1,2) and lying at an angle to the
plane occupied by the rear edges (3) of the end
panels (1,2), a flange (6) on each rear edge (3) lying
in a plane substantially at right angles to the plane of
its associated end panel, the flanges (6) being adapt-
ed to respectively engage in support members
whereby the retainer can be supported in an oper-
ative position.

FIG. 1.

EP 0 364 200 A2

# A RETAINER FOR A GROWTH SUPPORTING MEDIUM

This invention relates to retainers for a growth supporting medium such as soil and tiered assemblies thereof to form gardens developed on a multi-level concept, such gardens are hereinafter called vertical gardens. Such a garden provides many growing areas one above the other, each area is substantially equal to the site area over which the vertical garden is located. As a consequence site areas are more efficiently used each providing a location for a plurality of growing areas (beds) where in normal cultivation a single site area provided a single bed.

Examples of the above general concept are to be seen in my earlier US patents 4,334,387 and 4,380,136.

As will be readily understood the system has many advantages including efficient utilisation of site areas as there is no need for paths between beds normally needed to allow flowers and/or vegetables to be tended, many "beds" at different elevations can be cared for from a single path. Some unpleasant aspects of gardening can be avoided, such as bending over the garden beds to remove weeds or otherwise care for the growing plants. The garden beds according to the invention can be located at levels enabling all the required planting, tending and harvesting work to be done whilst standing substantially erect.

Vertical gardens as proposed can be mounted against a wall, or can be used as a vertical flower garden to act as a privacy barrier, or a single or multi-sided vertical garden can be used as a free standing architectural feature wall. The possible uses are many and include gardens to raise delicate crops, expensive or exotic crops or just simply flower displays.

It is the object of this invention to provide components enabling vertical gardens, as hereinbefore described, to be constructed without the complications of the structures hitherto developed for the purpose.

Broadly, the invention can be said to comprise a retainer for a growth supporting medium wherein the retainer includes a generally rectangular front panel with upper and lower edges and end edges, two like end panels for the retainer with an upper edge of each end panel longer than a lower edge for each end panel thereby to provide a front edge for each end panel which is longer than a rear edge of each end panel with the front edges of the end panels joined to the end edges of the front panel to provide a retainer of substantially U form having an upper cross-sectional area greater than its lower cross-sectional area and with said front panel inclined relative to a plane containing the rear edges of the end panels, and mounting means on the rear edges of each end panel for sliding engagement in a co-operating support means.

The invention in several presently preferred forms will now be described with reference to the accompanying drawings in which;

Fig.1 is a perspective view of a first embodiment of the retainer of the invention,

Fig.2 is a fragmentary perspective view of a means for mounting the retainer of Fig.1 to a support,

Fig.3 is a fragmentary perspective view of another means for mounting the retainer of Fig.1 to a support,

Fig.4 is a fragmentary perspective view of a further means for mounting the retainer of Fig.1 to a support,

Fig.5 is a fragmentary perspective view of a first form of post support for a retainer having the form of Fig.1,

Fig.6 is a fragmentary perspective view of a form of post support for a retainer having a mounting means as illustrated in Fig.4,

Fig.7 is a variation of the post support of Fig.6,

Fig.8 is a fragmentary sectional end elevation of a pair of tiered retainers as illustrated in Fig.1 engaged with a post as illustrated in Fig.5,

Fig.9 is a fragmentary perspective view of a modification of the end panel of the retainer as illustrated in Fig.1,

Fig.10 is a view similar to Fig.9 showing an alternative modification,

Fig.11 is fragmentary end elevation of a pair of tiered retainers showing a modification to the front and end panels of the upper retainer,

Fig.12 is a view similar to Fig.8 showing a liner installed in each retainer, and

Fig.13 is a fragmentary perspective view of two retainer support posts as illustrated in Fig.5 joined by a backing panel.

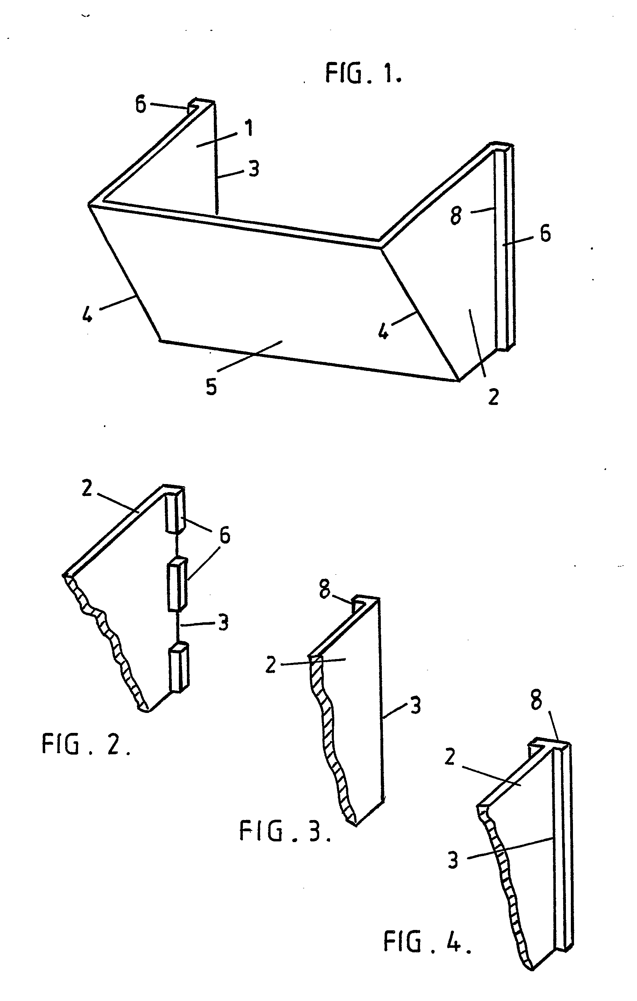

Referring to Fig.1 there is shown a retainer for a growth support medium, such as earth, according to the invention it is of general U configuration comprised of a pair of ends 1 and 2 with rear edges 3 and inclined front edges 4. There is a front panel 5 joining the front edges 4. Along the rear edges 3 of the end panels there are single outwardly directed flanges 6. The flanges 6 can be inwardly directed as an alternative construction, see Fig.3. In both cases the rear edges 3 of the ends 1 and 2 will be of L configuration. Fig.2 shows and alternative arrangement where the flange 6 is not continuous.

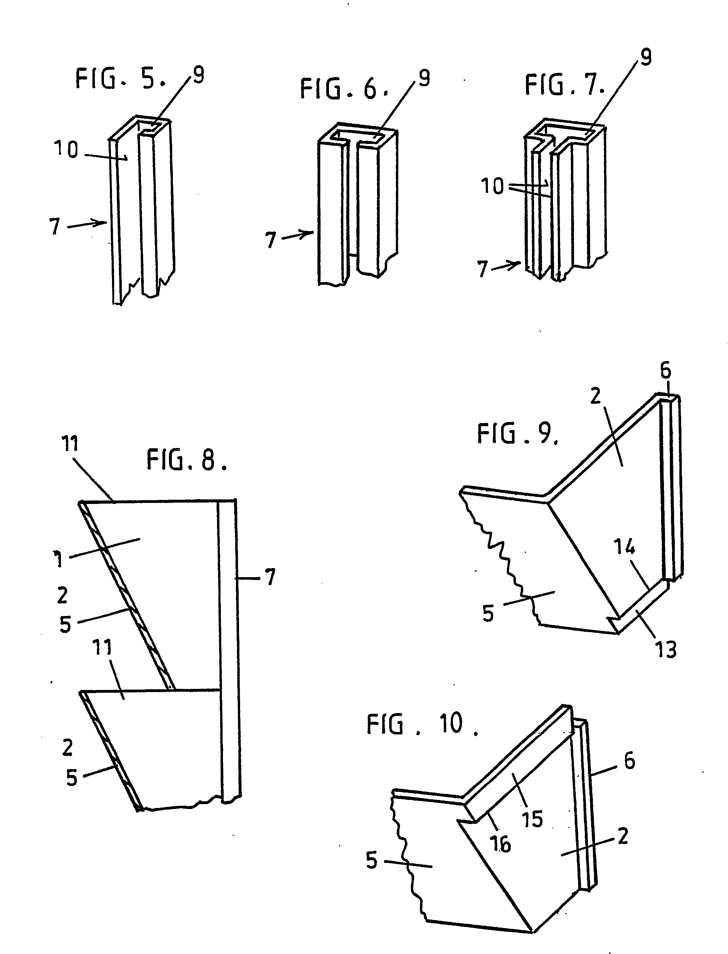

Fig.4 shows and arrangement where the single flange 6 of the rear edges 3 of the ends 1 and 2 is complemented by a like oppositely directed flange thereby converting the egdes 3 to T configuration as indicated 8. Figs.5,6 and 7 illustrate the configuration of posts 7 to co-operate with the flange configurations of Figs.1 and 4.

The posts 7 have a cross-sectional shape which includes a channel 9 to house the L flange 6 (see Fig.5) or the T flange 8 (see Figs.6 and 7. In the Figs.5 and 7 there are legs 10 designed to be in substantially abutting relationship with the end panels 1 or 2 of the retainer.

The posts 7 can be fixed in any suitable manner to a support such as a wall or a fence or can be part of a backing member which comprises two posts 7 and a plate member therebetween, see item 19 of Fig.13.

Fig.8 is a sectional end view of part of a tiered assembly of two retainers of the type illustrated in Fig.1 engaged with a post 7 as illustrated in Fig.5 with the internal soil cavity clearly evident. The growing zones are indicated 11 and represent large planting areas which aggregate to many times the area on which the retainer tier actually stands. As will be understood this represents a very efficient use of available garden site area.

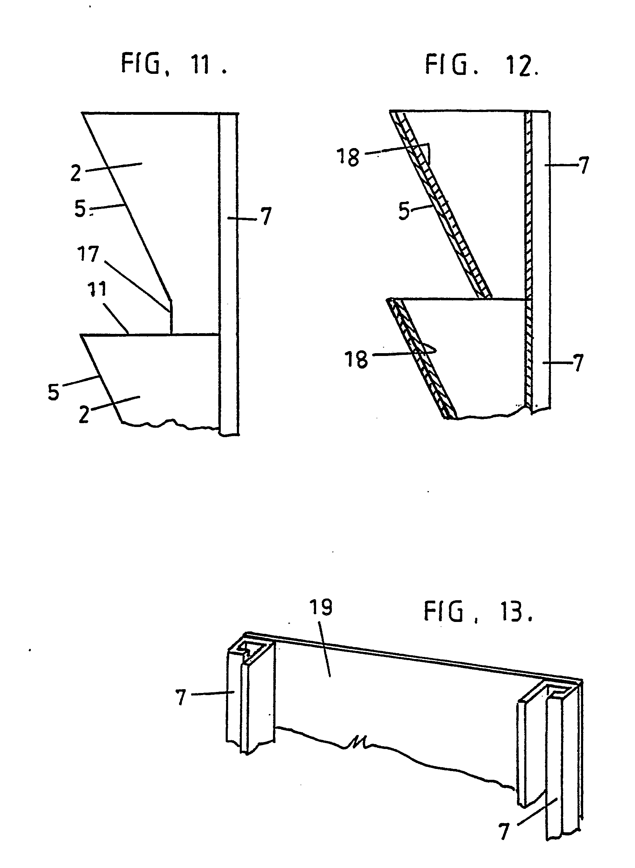

The foregoing versions of the apparatus can be modified to provide positive engagement between each retainer and the next lower retainer in a tier of retainers. This is achieved by having the bottoms of the narrow ends of the retainer sides joggled inwards, see Fig.9 where the joggled lip portion so formed is indicated 13 and a shoulder 14 is provided. Alternatively, the upper edges of the retainer ends can be joggled outwardly as indicated 15 in Fig.10 to from a shoulder 16. A combination of top and bottom joggles could also be used. The arrangement is such that the end to end dimension of the joggled portions will enter or allow entry of the co-operating portion of a superimposed retainer.

Fig.11 is an end view similar to Fig.8, but not in section, of an alternate form of the retainer and it will be seen that there is a vertical continuation 17 of the retainer front 5. The continuation 17 increases the vertical spacing of the growing zones 11 of a retainer tier. The vertical spacing can be varied in accordance with the expected height of plants to be planted in the growing zones.

The present inventon has been designed primarily to allow for the manufacture of the retainers from a light weight, strong and corrosion resistant material. Plastics materials would be ideally suited for the manufacture of the retainers as hereinbefore described and illustrated. Some plastics materials have manufacturing advantages over other plastics materials, for example, foamed polystyrene retainers can be designed to have a density which provides strength with associated light weight.

Foamed polystyrene has other features and physical characteristics which makes it an attractive material for the manufacture of the retainers as proposed by the invention. As will be understood the retainers will be exposed to hot sun and winds and cold night air. The use of foamed polystyrene with its naturally low heat transference characteristics as the material for the retainers will minimises the effect of large ambient temperature changes on the plants growing in soil in the retainers.

Foamed polystyrene also offers the possibility of closed cells on the retainer outer face and open cells in the remainder of the retainer body. The open cells could act as a repository for water and the retainers would then become a slow release water storage means for the soil in the retainers.

In an alternative arrangement, the retainers could comprise a metal or timber outer with a liner of suitable plactics material, as proposed above. For example, a thin walled polystyrene liner for a retainer of metal or timber would provide several advantages. A sectional end view of a retainer of this form is shown in Fig.12 with the liner indicated 18.

As will be understood the liner 18 could be of sleeve form and four sided (as shown in Fig.12) or a U shaped liner mounted in a suitable manner, as by adhesive, could be used. In the latter case there would be no liner panel between the posts 7 and adjacent the surface (wall, fence or the like) to which the posts 7 are fixed. Where the posts 7 are joined by a panel 19 as shown in Fig.13, to allow the tiered retainer assembly to be free standing as foreshadowed above, the panel 19 would form the backing for the tiered retainers.

The provision of an outer retainer with a liner sleeve 18 housed therein allows the retainer to become more a decorative item and a liner retainer, rather than a soil retainer. This would allow the outer retainer to have a decorative finish applied it or to be made of otherewise unsuitable material. In this way the retainer can be used for aesthetic effect or for fashion finish. The liner would prevent direct water contact with the retainer and would ensure extended life for the retainer and thereby justify the use and cost of decorative materials or processes applied to the retainer. The liner can be replaced if damaged or otherwise made unserviceable and would be inexpensive to replace compared to the cost of the supporting retainer.

Whilst foamed polystyrene has been described at length above it is to be understood that other plastics materials could be fashioned into the retainer as proposed by the invention.

## Claims

1. A retainer for a growth supporting medium wherein the retainer includes a generally rectangular front panel with upper and lower edges and end edges, two like end panels for the retainer with an upper edge of each end panel longer than a lower edge for each end panel thereby to provide a front edge for each end panel which is longer than a rear edge of each end panel with the front edges of the end panels joined to the end edges of the front panel to provide a retainer of substantially U form having an upper cross-sectional area greater than its lower cross-sectional area and with said front panel inclined relative to a plane containing the rear edges of the end panels, and mounting means on the rear edges of each end panel for sliding engagement in a co-operating support means.

2. A retainer as claimed in claim 1 wherein the mounting means on each end panel comprises a flange lying substantially at right angles to the plane of the end panel.

3. A retainer as claimed in claim 2 wherein the flanges of the end panels are directed towards each other.

4. A retainer as claimed in claim 2 wherein the flanges of the end panels are directed away from each other.

5. A retainer as claimed in claim 2 wherein the flanges of the end panels are intersected by the end panels to thereby form T shaped rear edges for the end panels.

6. A retainer as claimed in anyone of claims 1 to 5 wherein the mounting means is not continuous along the rear edges of the end panels.

7. A retainer as claimed in anyone of claims 1 to 6 wherein a full width zone of each end panel adjacent its lower edge is offset inwardly with respect to the retainer to provide a lip and an external shoulder with the distance between the outer surfaces of the lips less than the distance between the inner faces of the end panels at their upper edges thereby to allow retainers to be tiered with the bottom of a second (upper) retainer entered into the top of a first (lower) retainer with the shoulders of the second (upper) retainer respectively abutting the upper edges of the end panels of the first (lower) retainer.

8. A retainer as claimed in anyone of claims 1 to 6 wherein a full width zone of each end panel adjacent its upper edge is offset outwardly with respect to the retainer to provide a lip and an internal shoulder with the distance between the the inner surfaces of the lips greater than the distance between the outer surfaces of the end panels at their lower edges to allow the bottom of a second (upper) retainer to be entered into the top of a first (lower) retainer with the lower edges of the end panels respectively abutting the shoulders of the end panels of the first (lower) retainer.

9. A retainer as claimed in anyone of claims 1 to 8 wherein the retainer cross-sectional area diminishes uniformly from adjacent the top edges of the retainer front and end panels to the bottom edges of the retainer front and end panels.

10. A retainer as claimed in anyone of claims 1 to 8 wherein the front panel and the end panels are shaped to provide a U configuration of uniform cross-sectional area for part of the height of the retainer adjacent the lower edges of the retainer front and end panels.

11. A retainer as claimed in anyone of claims 1 to 10 including a liner which extends over at least the inner faces of the front and end panels of the retainer.

12. A retainer as claimed in claim 11 wherein the liner is a four sided sleeve with two sides to lie in engagement with the inner surfaces of the end panels of the retainer and a front panel to lie in engagement with the inner surface front panel of the retainer and a fourth side which extends between the rear edges of the end panels.

13. A retainer as claimed in claim 11 wherein the liner is a made of a porous material.

14. A retainer as claimed in claim 11 wherein the liner has a body part which is porous and an outer surface which is substantially water impermeable.

15. A retainer as claimed in anyone of claims 11 to 14 where the liner is made of foamed polystyrene.

16. A retainer as claimed in anyone of the claims 1 to 15 mounted by said mounting means in two posts which provide said co-operating support means thereby to provide a retainer and post assembly.

17. A retainer and posts as claimed in claim 16 including further retainers similarly mounted in said two posts thereby to provide a retainer and post assembly.

18. A retainer and post assembly as claimed in claim 16 or claim 17 wherein the posts are joined and held in spaced relationship by a backing panel.

FIG. 1.

FIG. 2.

FIG. 3.

FIG. 4.

FIG. 5.

FIG. 6.

FIG. 7.

FIG. 8.

FIG. 9.

FIG. 10.

FIG. 11.

FIG. 12.

FIG. 13.